# EUROPÄISCHE PATENTANMELDUNG

(11) **EP 1 559 640 A1**
(43) Veröffentlichungstag der Anmeldung: **03.08.2005**
(21) Anmeldenummer: 04450021.3
(22) Anmeldetag: 02.02.2004
(51) Int. Cl.: B62D 25/20

(54) **Fussboden von Personenkraftwagen**

(71) Anmelder: Dipl.-Ing. Welf Wiemer, 1030 Wien (AT)
(72) Erfinder: Dipl.-Ing. Welf Wiemer, 1030 Wien (AT)
(74) Vertreter: Patentanwälte Barger, Piso & Partner

(57) **Zusammenfassung**

Die Erfindung ist dadurch gekennzeichnet, dass der Fußboden zumindest teilweise aus einer Tragschale aus Kunststoffmaterial oder Aluminium besteht, die auf der dem Inneren des PKWs zugekehrten Innenseite zumindest einen Bereich aufweist, in dem eine Deckschicht, bestehend aus Holzfumier oder zumindest einer Schichte Kork, flächig mit der Tragschale verbunden ist und dass der Elastizitätsmodul des Materials, aus dem die Tragschale im Bereich der Deckschicht besteht, größer ist als der Elastizitätsmodul der Deckschicht.

## Beschreibung

Die Erfindung betrifft den Fußboden von Personenkraftwagen, sogenannten PKWs. Neuzeitliche PKWs besitzen eine zumeist mit mehreren Vertiefungen, Erhebungen, Ausnehmungen und seitlichen, nach oben gezogenen Schürzen versehene, zumeist metallische Plattform, die üblicherweise einstückig die Bodenplatte der selbsttragenden Karosserie darstellt oder einen Teil derselben bildet. In den von den Passagieren einsehbaren Bereichen ist der Fußboden üblicherweise ein Teppichboden, der entsprechend vorgeformt und gegebenenfalls mit einer ein- oder mehrlagigen Rückenbeschichtung versehen und mit den notwendigen Ausnehmungen für die Befestigungspunkte der Sitze u.dgl. ausgestattet ist und passend mit der Oberseite des Bodenbleches verbunden wird.

Oft besteht diese Verbindung aus einer flächigen Verklebung, da dadurch jedwedes Verrutschen und damit jede Faltenbildung zuverlässig vermieden wird und da dadurch auch die Korrosionsgefahr im engen, spaltartigen Bereich zwischen der Bodenplatte aus Metall und dem Rücken des Teppichs hintangehalten wird und schließlich, weil dadurch eine hervorragende Vibrationsdämpfung und damit eine Geräuschminderung und eine Anhebung des Komforts der Passagiere verbunden ist.

Andere Befestigungen umfassen das Einklemmen im Randbereich des Teppichs, was einen, wenn auch schwierigen, Ausbau ermöglicht, aber dafür die Faltenbildung zuläßt und für die Geräuschdämpfung nicht optimal ist.

In vielen Fällen sind diese Teppiche in den Bereichen, in denen sie besonders beansprucht werden, so beispielsweise an den Stellen, an denen der Fahrer im Bereich der Pedale üblicherweise seine Fersen abstützt, mit Verstärkungselementen oder mit Kunststoffeinlagen od.dgl. versehen, um dem an diesen Stellen erhöhten Abrieb zu begegnen.

Diese Teppichböden haben sich im wesentlichen bewährt, weisen aber doch auch Nachteile auf: Obwohl üblicherweise hoch qualitative Materialien verwendet werden, kann nicht verhindert werden, dass die Teppiche im Laufe des Gebrauches fleckig und unansehnlich werden. Insbesondere, wenn Flüssigkeiten verschüttet werden oder wenn Kaugummis zertreten werden, kommt es zu starken optischen Beeinträchtigungen. Darüber hinaus sind gerade diese Teppichböden, die ja unmittelbar von Parkplätzen, der Straßen, Wiesen u.ähnl. Umgebung aus betreten werden, einer besonders hohen Verschmutzung und einem hohen Eintrag an Fremdkörpern ausgeliefert, können aber ihrerseits nur durch Staubsaugen gereinigt werden, da alle anderen Arten der Reinigung nicht in der Lage sind, Fremdkörper aus dem Flor des Teppichs zu entfernen. Eine chemische Reinigung ist nur nach dem aufwendigen Ausbau aus dem Fahrzeug möglich, bei verklebten Teppichen somit so gut wie gar nicht.

Für die schlechte Reinigungsmöglichkeit derartiger Teppiche ist es auch ein Indiz, dass insbesondere bei viel genutzten Fahrzeugen bzw. im Bereich der Sitze, die von Kindern benutzt werden, auf die Teppiche Gummimatten und sogar Gummi- bzw. Kunststoffschalen gelegt werden, die das Verschmutzen der Teppiche verhindern sollen.

Schließlich stellen Teppiche, auch die verwendeten synthetischen Teppiche, eine Brutstätte für Mikroorganismen dar, die die Gesundheit und das Wohlbefinden der Fahrgäste, insbesondere der Fahrgäste mit Neigung zu Allergien, beeinträchtigen können.

Dass die Verwendung der Teppiche nicht zwingend mit objektiven Kriterien einhergeht, geht auch daraus hervor, dass Nutzfahrzeuge, wie LKW oder Busse, bei denen der Fahrersitz praktisch den Arbeitsplatz darstellt, praktisch nie mit solchen Teppichen ausgerüstet sind. Bei derartigen Fahrzeugen verwendet man porenlose, glatte Gummi- oder Kunststoffmaterialien, auf die unter Umständen zur Erhöhung der Behaglichkeit Teppiche lose aufgelegt werden. Diese losen Teppiche kann man auch leicht durch Entnehmen aus dem Fahrzeug und Abklopfen im Freien reinigen. Es erscheint somit begründet, dass die Verwendung der (ausgeformten) Teppiche mehr auf die Wünsche der Hersteller, für die die Montage eines einstückigen, genau passenden Teils einfacher ist als der früher, bis in die 60-iger Jahre übliche, stückweise Aufbau des Bodenbereiches, Rücksicht nimmt als auf die Wünsche der Benutzer.

Dazu kommt eine Art Modeerscheinung, die, zeitlich der Verwendung der geformten Teppiche im Automobilbau vorausgehend, auch im Wohn- und Arbeitsbereich Spannteppiche, die von Wand zu Wand reichen und flächig mit dem Boden verklebt sind, favorisiert hat, was in Anbetracht der damaligen Holz-, Stein- und Kunststoffböden leicht erklärbar ist. In den letzten Jahren allerdings ist ein deutlicher Rückgang des Anteils der Spannteppiche bei neu verlegten Böden festzustellen, was sicherlich auch im Wohnungsbereich auf die oben genannten objektiven Nachteile des Spannteppichs zurückzuführen ist.

Es besteht somit ein Bedarf an einem Fußboden für PKWs, der einerseits die Forderungen der Hersteller nach einfachem kostengünstigen Einbau erfüllt und andererseits den Benutzern der Kraftfahrzeuge eine leichte Reinigung, ein Vermeiden der allgemeinen oben genannten Nachteile der Teppichböden und ein optisch ansprechendes Aussehen aufweist. Die im Automobilbau üblichen Randbedingungen, die an die Festigkeit, an die Anforderungen des Leichtbaues, an die brandhemmenden Eigenschaften, an die mangelnde Toxizität, an die mechanische Sicherheit, insbesondere den Splitterschutz, u.dgl. gestellt werden, müssen selbstverständlich ebenfalls miterfüllt sein, doch ist dies in Anbetracht des Verwendungszweckes eine Selbstverständlichkeit.

Diese Ziele werden erfindungsgemäß dadurch erreicht, dass der Fußboden aus einer Tragschale aus Kunststoffmaterial besteht, deren Außenabmessungen dem Bereich des Bodenbleches des Fahrzeuges, in dem sie den Fußboden bilden soll, der Form und den Abmessungen nach entspricht und dass sie auf der dem Benutzer zugekehrten Innenseite zumindest einen Bereich aufweist, in dem eine Deckschicht, bestehend aus Holzfurnier oder einer Schichte Kork, flächig mit der Kunststoffschale verbunden ist und dass der Elastizitätsmodul des Materials, aus dem die Tragschale im Bereich der Deckschicht besteht, größer ist als der Elastizitätsmodul der Deckschicht.

Durch die Erfindung wird es möglich, in Kraftfahrzeugen einen Fußboden zu verwenden, der den Holzfußböden bzw. Korkfußböden im Wohnbereich optisch gleich kommt und die Nachteile der Teppichböden vollständig vermeidet.

Holz wurde im Automobilbau an sich seit Beginn desselben verwendet, in den letzten Jahrzehnten allerdings mehr und mehr zurückgedrängt auf dekorative Elemente im Bereich des Armaturenbrettes und der Türverkleidungen. Auch diese Bereiche sind seit vielen Jahren nicht mehr aus massivem Holz, sondern bestehen aus einem Trägermaterial, auf das eine dünne Schichte aus Holz oder Holzimitat aufgebracht ist. All diese Bauteile sind nicht in der Lage, auch nur annähernd den Belastungen Standzuhalten, denen ein Fußboden über lange Zeiträume standhalten muß.

Die üblichen Furniere, die im Wohnungsbau oder Bürobau bei der Herstellung von Holzfußböden verwendet werden, sind auf Platten aufgebracht, die aus sogenannten Holzfaserwerkstoffen od.dgl. bestehen, so dass das Furnier nur Druckkräfte auf den Untergrund zu übertragen braucht, wodurch seine mechanische Belastung, wenn auch nicht sein Abrieb, deutlich reduziert ist. Derartige Untergründe sind aber zur Verwendung der dreidimensional gebogenen Schalen des Fußbodenbereiches von Kraftfahrzeugen nicht zugänglich gewesen.

Es ist auch bekannt, Furnier zu Dekorationszwecken nach intensivem Dämpfen auf dreidimensional gekrümmte Oberflächen aufzukleben, doch werden die so hergestellten Gegenstände, die mechanisch nicht stabil sind, eben nur zur Dekoration verwendet.

Erst durch die erfindungsgemäße Kombination einer aus Kunststoff mit hohem Elastizitätsmodul bzw. Aluminium hergestellten Tragschale mit einer auf der Benutzerseite aufgebrachten Deckschicht aus Furnier bzw. Kork ist es möglich geworden, die mechanische Beanspruchung des im Wohnungsbau üblichen Holzbodens auf die gekrümmten Verhältnisse im KFZ-Boden tauglich zu übertragen.

Die Dicke und das Material der Tragschale spielt keine große Rolle, soferne die Tragschale flächig mit dem KFZ-Boden in Kontakt steht. In diesem Fall werden nämlich die auf das Furnier wirkenden Druckkräfte lokal auf die Tragschale übertragen, die wiederum diese Druckkräfte auf den Fahrzeugboden weiterleitet, ohne dass für das Furnier bzw. die Tragschale schädliche Biegespannungen auftreten. Da nun die Tragschale erfindungsgemäß einen höheren Elastizitätsmodul aufweist als das verwendete Furnier, findet ein "Durchdrücken" des Furniers nicht statt und der Boden in seiner benutzungsfertigen Form vermag die Belastung zu ertragen.

Wenn wegen großer Toleranzen oder dem Einbau in verschiedene, leicht unterschiedliche, Bodenplatten zu befürchten ist, das Bereiche der Tragschale nicht ausreichend am Bodenblech aufliegen, so ist es notwendig, die Tragschale so weit zu verstärken, dass sie auch ohne flächige Unterstützung durch den Boden bei der lokalen Belastung durch den Passagier so formstabil bleibt, dass ein Durchdrücken des Furniers nicht zu befürchten ist. Die entsprechende Mindeststärke kann vom Fachmann auf dem Gebiet der Kunststofftechnologie in Kenntnis der zu erwartenden maximalen Belastung, beispielsweise eine Stöckelschuhe tragende erwachsene Person, in Kenntnis des verwendeten Furniers und des verwendeten Kunststoffes und unter Zugrundelegung des größten, nicht vom Bodenblech des Fahrzeug unterstützten, Bereiches leicht ausgerechnet werden.

Es wird bevorzugt, dass insbesondere die Randabmessungen der erfindungsgemäßen Tragschale samt Furnier im fertigen Zustand so ausgebildet sind, dass sie einen vorgefertigten Teppicheinsatz beim Zusammenbau des Kraftfahrzeuges direkt ersetzen kann, um die Logistik der Herstellung des KFZ so einfach wie möglich zu halten. Selbstverständlich ist es möglich und in einigen Fällen, speziell geometrisch komplexer oder großflächiger Fußböden auch vorteilhaft, die Tragschale in mehrere Bestandteile zu teilen, um deren Handhabung und Montage, aber auch eine Demontage, zu erleichtern.

Als Material für die Tragschale kann jedes im Automobilbau bereits verwendete Kunststoffmaterial mit den passenden mechanischen Eigenschaften, insbesondere faserverstärktes Material, zum Einsatz kommen. Dies können Polymere, Phenolharze, Aminoplaste u.ähnl. sein. Verstärkungsfasern können natürliche Fasern, Glasfasern, aber in besonderen Fällen auch Kohlefasern sein. Derartige Kunststoffmaterialien sind wegen ihrer hohen Festigkeit bei geringer Dichte besonders bevorzugt, doch ist auch die Verwendung von Aluminium bzw. dessen Legierungen möglich. Die Bezeichnung "Tragschale" bedeutet nicht, dass die Form dieses Gebildes tatsächlich einer Schale gleichen muß, die Form hängt vielmehr vom jeweiligen Einsatzgebiet ab und kann, insbesondere bei den derzeit sehr beliebten "Sport Utility Vehicles", den sogenannten SUVs, durchaus auch praktisch eben sein. Da aber in den meisten Fällen der Boden im Bereich eines jeden Sitzes eine schalenförmige Vertiefung aufweist, wurde in der vorliegenden Anmeldung diese Bezeichnung gewählt.

Der Furnierüberzug kann mit einer oder mehreren Schichten aus Kunststoff, Lack, Wachs, Harz, durchsichtigem Kunststoff, etc. gegen Beschädigungen und das Eindringen von Feuchtigkeit geschützt sein, wie dies auch im Wohn- und Bürobereich durch Versiegeln od.dgl. geschieht. Es kann, insbesondere wenn die Tragschale aus einem hartgeschäumten Material besteht, eine als Gegenzug dienende Beschichtung durch eine Folie, insbesondere aus Feuchtigkeit abweisendem Material, auf ihrer dem Furnier abgewandten Seite aufgebracht sein, so dass, im Querschnitt gesehen, die fertige Schale eine Sandwichstruktur aufweist.

Es muß, wie eingangs erwähnt, nicht die gesamte dem Benutzer zugewandte Fläche mit Furnier bzw. Kork belegt sein, es durchaus möglich und aus optischen Gründen in vielen Fällen vorteilhaft, beispielsweise den Getriebetunnel nicht mit Furnier, sondern mit einem optisch davon abgesetzten Material, beispielsweise in Form einer Folie, abzudecken. Dieses Material kann im gleichen Schritt wie das Furnier oder in einem eigenen Schritt vor oder nach dem Furnier mit der Trägerschale verbunden werden.

Der Begriff "Furnier", wie er hier verwendet wird, umfasst nicht nur die klassischen, bei Möbeln verwendeten Furniere, sondern auch die aus mehreren oder vielen Teilen zusammengesetzten Furniere, die im Tischlereigewerbe erhältlich und üblich sind. So gibt es bereits Furniere mit dem Aussehen von Schiffböden, von Fischgrätparkett u.dgl. mehr. All diese Furniere können für die Erfindung verwendet werden. Wo in der Beschreibung nur Furniere, aber nicht Kork erwähnt wird, gilt das gesagte für den Kork mutatis mutandis. Auch Kork gibt es in verschiedenen dünnschichtigen und daher entsprechend biegsamen, aus einzelnen Partikeln zusammengefügten Platten bzw. Bögen im Handel.

So, wie schon bisher bei den Teppichen, ist es selbstverständlich möglich und vorteilhaft, an höchst belasteten Stellen, wie beim Fahrerboden vor den Pedalen, Einsätze aus extrem widerstandsfähigen Material vorzusehen, dies ist bei der Anbringung an der Tragschale noch leichter möglich als bei den bekannten Teppichen.

Zur Frage der Sicherheit der Passagiere soll noch ausgeführt werden, dass durch die geringe Dicke des Furnieres bzw. des Korks und die flächige Verklebung ein Splittern des Furnier im Falle eines Unfalles nicht zu befürchten ist und dass diese Gefahr auch für die Tragschale als Ganzes, so wie schon im Stand der Technik bei größeren Kunststoffteilen im Automobilbau bekannt, durch Vorsehen von Sollbruchstellen an passenden Stellen für den Fall der Überbelastung vermieden werden kann.

Als Leime kommen insbesondere Harnstoffharzleime, Polyvinylacetatleime, Ethen-Vinylacetatleim, aber auch Schmelzkleber, Polyurethane, Epoxydharzkleber oder Resorcinleime in Frage. Dabei wird der gewählte Leim möglichst gleichmäßig dünn aufgetragen und sodann, je nach gewähltem Leim bei Umgebungstemperatur oder erhöhter Temperatur das Furnier aufgebracht und angepresst. Die Pressdauer liegt aber üblicherweise zwischen zwei und fünf Minuten, der Pressdruck zwischen 0,2 und 1,2 N/mm².

Die Pressen können mechanisch oder hydraulisch ausgebildet sein, für Sonderfälle, oder für heikle Stellen, die für automatisierte Pressen nicht zugänglich sind, ist selbstverständlich in Einzelfällen auch möglich, durch einen Furnierhammer das Furnier händisch aufzubringen. Es ist nicht notwendig, dass das Pressen in einem Schritt erfolgt, insbesondere bei konkaven Pressen können durch streifenweises Anpressen die Probleme mit dem ja möglichst immer normal zur Fläche stehenden Pressstempel vermieden werden.

Als Trägermaterialien eignen sich, wie weiter oben ausgeführt, Kunststoffe, deren Elastizitätsmodul höher ist als der des aufgebrachten Materials, dies ist im Falle von Holzfurnier 8.000 bis 16.0000 N/mm², im Falle von Kork auch darunter, oder Aluminium bzw. Aluminiumlegierungen. Durch entsprechende Wahl des Trägermaterials wird dessen minimal notwendige Stärke bestimmt, da ja das Trägermaterial nicht nur zur Folge seines hohen Elastizitätmoduls das Durchdrücken des Furniers verhindern muß, sondern auch selbst bei dieser Belastung in Form bleiben soll. Dabei bedeutet im Sinne der Erfindung das "in Form bleiben", dass bei der selbstverständlich bei Belastung immer erfolgenden Deformation das Furnier nicht beschädigt wird. Diese Bedingung ist im allgemeinen strenger als die Bedingung für die Tragfähigkeit der aus dem Trägermaterial hergestellten Tragschale.

Als Beispiele für das Trägermaterial können die folgenden Materialien angegeben werden, wobei die angegebenen Materialien mit einem Elastizitätsmodul unter der Obergrenze des Holzes im Zusammenhang mit weicherem Holz verwendet werden können, für härteres Holz aber ungeeignet sind:
EP+70% CF-HM (Roving): 150.000 N/mm²,
UP-GF70 (Roving): 33.000 N/mm²,
PPS-(GF+Mineral)60: 33.000 N/mm²,
PPS-GF40: 17.000 N/mm²,
UP-GF50 (in Form einer Matte): 16.000 N/mm²,
PA66-GF60, trocken: 16.000 N/mm²,
PA12-CF25, luftfeucht: 15.000 N/mm²,
PA6-GF50, trocken: 15.000 N/mm²,
PEEK-CF30: 13.500 N/mm²,
POM-GF4, Copolymer: 13.000 N/mm²,
PA66-GF50, luftfeucht: 13.000 N/mm²,
PET-GF30: 13.000 N/mm²,
UP-GF50, luftfeucht: 13.000 N/mm²,
UP-GF30: 13.000 N/mm², für Formteile im Fahrzeugbau in Verwendung,
PAEK-GF30: 12.100 N/mm²,
SAN-GF35: 12.000 N/mm²,
EP mit Glasfaser und Mineralmehl verstärkt: 15.000 N/mm²,
UP mit Glasfaser und Mineralmehl verstärkt: 16.000 N/mm²,
MF mit Glasfaser und Mineralmehl verstärkt: 10.000 N/mm²,
Phenolharze gefüllt: 9-15.000 N/mm²,
Melaminharze gefüllt: 5-10.000 N/mm². Die beiden letztgenannten Kunststoffe benötigen bei der Herstellung der Tragschale einen hohen Verarbeitungsdruck.

### Erklärung:

Die erste Abkürzung steht für das Reaktionsharz bzw. den unverstärkten Kunststoff, die zweite Abkürzung, hinter dem Bindestrich, für das Füll- bzw. Verstärkungsmaterial und seinen Anteil in %.
EP: Epoxyharze (Epoxidharze) [unverstärkt 3.500 N/mm²]
UP: Ungesättigter Polyester [unverstärkt 3.000-4.800 N/mm²]
PPS: Polyphenylensulfid
PA: Polyamide
PAEK: Polyaryletherketon
SAN: Styrol/Acrylnitril-Copolymer
PEEK: Polyetheretherketon
POM: Polyoxymethylen (Polyacetal)
PET: Polyethylenterephthalat
MF: Melamin-Formaldehyd-Harz bzw. Melaminharz
CF: Kohlenstofffasern
GF: Glasfasern
GK: Mikroglaskugeln

## Patentansprüche

1. Fußboden von Personenkraftwagen, sogenannten PKWs, **dadurch gekennzeichnet, dass** der Fußboden zumindest teilweise aus einer Tragschale aus Kunststoffmaterial oder Aluminium besteht, die auf der dem Inneren des PKWs zugekehrten Innenseite zumindest einen Bereich aufweist, in dem eine Deckschicht, bestehend aus Holzfurnier oder zumindest einer Schichte Kork, flächig mit der Tragschale verbunden ist und dass der Elastizitätsmodul des Materials, aus dem die Tragschale im Bereich der Deckschicht besteht, größer ist als der Elastizitätsmodul der Deckschicht.

2. Fußboden nach Anspruch 1, **dadurch gekennzeichnet, dass** die Außenabmessungen der Tragschale dem Bereich des Bodenbleches des Fahrzeuges, in dem sie den Fußboden bildet, der Form und den Abmessungen nach entspricht.

3. Fußboden nach einem der Ansprüche 1 oder 2, **dadurch gekennzeichnet, dass** die Tragschale im Bereich der Deckschicht auf der der Deckschicht abgewandten Seite eine Beschichtung aus Kunststoffolie aufweist.

4. Fußboden nach einem der voranstehenden Ansprüche, **dadurch gekennzeichnet, dass** die Deckschicht mit einer oder mehreren Schichten aus insbesondere durchsichtigem Kunststoff, Lack, Wachs oder Harz überzogen bzw. beschichtet ist.

5. Fußboden nach einem der voranstehenden Ansprüche, **dadurch gekennzeichnet, dass** als Klebstoff für das Deckmaterial ein Klebstoff aus der Gruppe: Harnstoffharzleime, Polyvinylacetatleime, Äthen-Vinylacetatleime, Schmelzkleber, Polyurethane, Epoxydharzkleber und Resorcinleime verwendet wird.

6. Fußboden nach einem der voranstehenden Ansprüche, **dadurch gekennzeichnet, dass** das Trägermaterial verstärktes Epoxyharz, Melaminharz, Phenolharz, Polyamid oder ungesättigter Polyester ist.

7. Fußboden nach Anspruch 6, **dadurch gekennzeichnet, dass** die Verstärkungen des Trägermaterials Verstärkungsfasern, wie z.B. natürliche Fasern, Glasfasern oder in besonderen Fällen auch Kohlefasern sind.
